# EUROPEAN PATENT SPECIFICATION

(11) **EP 3 579 535 B1**
(45) Date of publication and mention of the grant of the patent: **23.03.2022**
(21) Application number: 18176361.6
(22) Date of filing: 06.06.2018
(51) Int. Cl.: H04N 1/40, H04N 1/60

(54) **METHOD OF CONSTRUCTING A PREVIEW OF AN ELEVATED LENTICULAR PRINT**
VERFAHREN ZUR KONSTRUKTION EINER VORSCHAU EINES ERHÖHTEN LENTIKULARDRUCKS
PROCÉDÉ DE CONSTRUCTION D'UNE PRÉVISUALISATION D'UNE IMPRESSION LENTICULAIRE ÉLEVÉE

(43) Date of publication of application: 11.12.2019
(73) Proprietor: Canon Production Printing Holding B.V., 5914 HH Venlo (NL)
(72) Inventor: IONASCU, Felicia G., 5914 CA Venlo (NL); VALADE, Cédric T., 5914 CA Venlo (NL)
(74) Representative: Canon Production Printing IP Department

(56) References cited:
- WO-A1-2017/043065
- GB-A- 2 479 777
- US-A1- 2001 045 956
- WANG SHAOHAO ET AL: "Cartoon Rendering Illumination Model Based on Phong", 2013 SEVENTH INTERNATIONAL CONFERENCE ON IMAGE AND GRAPHICS, IEEE, 26 July 2013 (2013-07-26), pages 913-919, XP032515488, DOI: 10.1109/ICIG.2013.185 [retrieved on 2013-10-21]

## Description

The invention relates to a method of constructing a preview of an elevated lenticular print, the lenticular print having, on a two-dimensional manifold, a periodic pattern of repetitions of a three-dimensional shape that has a number n of faces, with surface pixels on the faces of the repetitions of the shape constituting n face images, one for each face of the shape, the method comprising a step of calculating preview images for a number of viewing positions such that the preview image represents an image that will be perceived by a viewer watching the print from the viewing position.

Techniques for elevated printing, such as 3D or relief ink jet printing, wherein several layers of ink are superposed in order to create a three-dimensional structure, may be used among others for forming lenticular objects that carry an image the contents of which change when the viewing position is shifted. An example is an autostereoscopic image wherein the periodic pattern is formed by a series of triangular prisms that extend in vertical direction and wherein two face images formed on the two faces of each prism show a scene as seen with the left eye and the right eye, respectively. As a consequence, the lenticular object simulates the parallax between the right and left eye of the viewer, so that a three-dimensional visual impression is created. However, lenticular objects may also be used for achieving other perplexing visual effects.

In order to produce elevated lenticular prints efficiently and with high quality, it is desired to have a preview that simulates the perceived visual impression even before the object is actually printed.

Conventional methods of constructing such a preview comprise modelling the elevated pattern on a mesh and UV-mapping of the interleaved images on the mesh. However, due to the typically very small widths of the three-dimensional shapes (prisms), the results are of poor quality due to aliasing and Moire artefacts.

WO2017/043065 discloses a printed product where colors are distributed on the top and bottom faces of a repetitive structure with rectangular cross-section, such that the printed product has anisotropic reflection characteristics. The color appearance of the printed product is estimated depending on the viewing direction.

It is therefore an object of the invention to construct previews of elevated lenticular prints with improved quality of the preview.

In order to achieve this object, the method according to the invention is defined by claim 1.

This method has the advantage that no mesh is needed for modelling the pattern of the three-dimensional shapes. Instead, the three-dimensional structure is modelled by a normal map that assigns a normal vector to each face of each repetition of the three-dimensional shape. This simplifies the subsequent step of calculating weight factors that indicate for each face of the three-dimensional shape how much the face image on that face will contribute to the perceived image as seen from the given viewing position. For example, the weight factors may simply be calculated by forming scalar products of the normal vectors and direction vectors that point from the pertinent face on the print to the viewing position. These weight factors may then be used for calculating the colors in the preview images. Since the three-dimensional shape has typically so small dimensions that the repetitive pattern can hardly be resolved with the human eye, the perceived color in a given small area on the print is a blend of the colors of the face images in that area, and this blend can be calculated by forming a weighted sum of the color values of the face images as weighted with the weight factors discussed above.

The result is a set of preview images, one for each viewing position, that predicts with high fidelity how the image on the print will be perceived from the given viewing position.

More specific optional features of the invention are indicated in the dependent claims. Typically, the two-dimensional manifold will be a flat plane. However, the invention is also applicable on curved manifolds, e.g., a lenticular structure on a curved surface of an object.

In the simplest case, the three-dimensional shape forming the periodic pattern will be a triangular prism with only two faces. However, prisms with three or more faces may also be used. In other cases, the three-dimensional shape may be a pyramid, for example, having three or more faces with different orientations in space.

In order to give a true impression of the final appearance and geometry of the lenticular print, known techniques such as bump mapping may optionally be used for calculating an additional specular component that will then be added to the diffuse component that has been obtained by blending the colors of the face images.

The mapping process for the specular component may also be based on the normal map, so that the specular component will in particular show highlight points or highlight lines created by the periodic three-dimensional pattern.

Embodiment examples will now be described in conjunction with the drawings, wherein:
- Fig. 1: is a collection of views comprising an enlarged cross-sectional view of a part of an elevated lenticular print as well as two views of the surface of that part of the lenticular print as seen from different viewing positions; and
- Fig. 2: is a flow diagram illustrating essential steps of the method according to the invention.

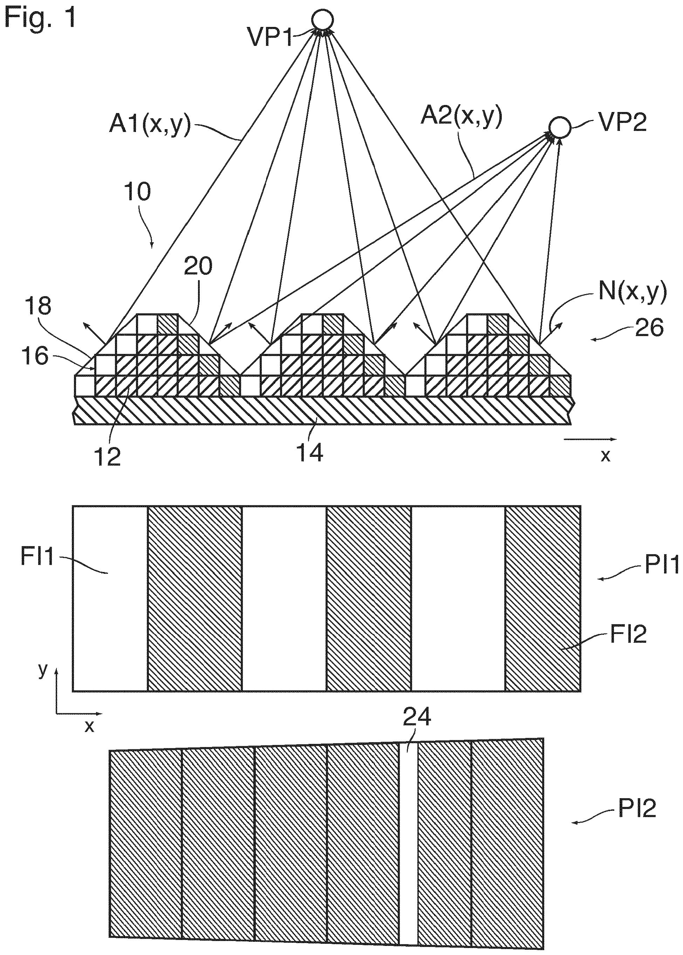

As is shown in Fig. 1, an elevated lenticular print 10 has been formed by applying and curing ink droplets 12 in several layers on a flat substrate 14. The substrate 14 extends in an x-y-plane, so that its top surface on which the ink droplets 12 are applied forms a flat two-dimensional manifold. The number of layers of ink droplets 12 depends on the x-y position on the substrate. In the example shown, the ink droplets 12 form a periodic pattern of repetitions of a three-dimensional basic shape which, in this example, is a prism 16. The cross-sectional shape of the prism 16 is an isosceles triangle forming two faces 18, 20 forming an angle of 45° with the surface of the substrate 14 but being inclined in opposite directions.

Below the cross-sectional view of the print 10, Fig. 1 shows a preview image PI1 representing a top plan view of the print 10 as seen from a first viewing position VP1. Similarly, the bottom part of Fig. 1 shows a second preview image PI2 showing the print from a second viewing position VP2. In case of the viewing position VP2, the inclination of the viewing direction leads to a perspective distortion of the image that is also reflected by the preview image PI2.

As can be seen in the preview image PI1, the surface pixels on the face 18 of the prism, i.e. the ink dots forming that surface, form part of a first face image FI1 that is distributed over all the faces 18 of the repetitions of the prism. Similarly, the surface pixels on the face 20 form part of a second face image FI2. In practice, the width of the prism 16 is so small, e.g. in the order of magnitude of 0.25 mm, that the pattern of the prisms can hardly be resolved with the human eye. Consequently, what a viewer will actually perceive will be a blend of the face images FI1 and FI2, with a blend ratio that depends upon the viewing position. Therefore, in order to construct the preview images PI1 and PI2 (and possibly others from other viewing positions), it will be necessary to calculate the blend ratios between the two face images, possibly as a function of not only the viewing position but also of the x-y-position.

From the viewing position VP1, the print 10 is seen head-on, so that the contributions of the two face images FI1 and FI2 to the perceived image will be essentially equal, resulting in a blend ratio of 0.5. If the distance of the viewing position VP1 from the print 10 is small, as in the example shown here, there will however be an increasing imbalance in the blend ratios with increasing offset of the prism in consideration from the x coordinate of the viewing position. Thus, for the prism on the left side in Fig. 1, the contribution of the face image FI1 will be slightly smaller than 50%, whereas, on the right side, the contribution of the face image FI1 will be slightly larger than 50%. This is why, in the preview image PI1, the stripes constituting the face images FI1 and FI2 have slightly different widths at left and right ends of the preview image.

When the distance of the viewing position VP1 from the print 10 (in a z-direction normal to the x-y-plane) becomes larger, the dependency of the blend ratio on the x-y-position becomes smaller and smaller and may eventually be neglected.

In case of the preview image PI2, the inclination of the viewing angle has the effect that the face image FI2 becomes dominant, because, from the viewing position VP2, the visible part of the face 18 (of the right most prism has shrunk to a very narrow stripe 24. In case of the central prism and the left most prism in Fig. 1, the viewing angle has become so small that the faces 18 are totally obscured and do not appear at all in the preview image PI2.

As discussed above, the dependency of the blend ratio on the x-coordinate on the substrate 14 will become smaller with increasing distance (in a z-direction normal to the x-y plane) between the print 10 and the viewing position VP2.

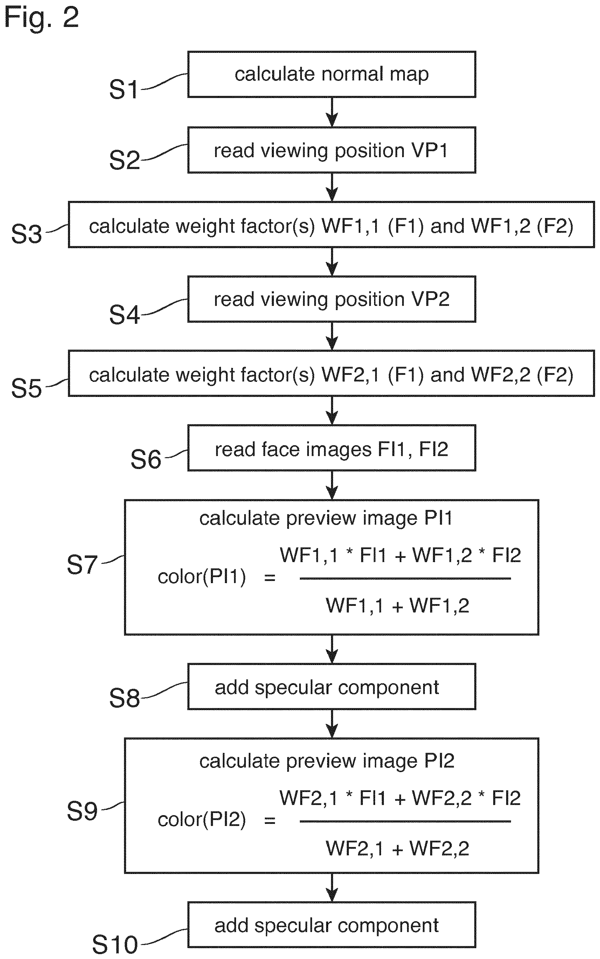

The method of constructing the preview images PI1 and PI2 will now be described in conjunction with the flow diagram shown in Fig. 2.

Step S1 is a step of calculating a normal map 26 (see cross-sectional view in Fig. 1) which represents the three-dimensional geometry of the elevated lenticular print 10. The normal map 26 is a vector-valued function that assigns to each point on the x-y-plane a vector N(x, y) that is perpendicular to the face 18 or 20 that is present at that x-y-position. Since, in the example shown, the presence 16 extends in the y-direction, the y-components of the normal vectors N(x, y) are zero for all points in the x-y-plane. In a more general case, when the basic shape of the periodic three-dimensional pattern is a prism, for example, the normal vectors N may have three non-zero components.

It will be observed that the normal vectors N(x, y) are constant on a given face 18 or 20 of a prism. Thus, the normal map 26 subdivides the x-y-plane into a tessellation of areas with constant normal vector N.

Step S2 in Fig. 2 is a step of reading the coordinates of the first viewing position VP1 in order to calculate the preview image PI1 for that viewing position. The coordinates of the viewing position may be entered by a user or may be read from a list of standard viewing positions.

Step S3 is a step of calculating a weight factor WF1,1 for the first viewing position VP1 and the first face F1 (face 18) of the prism and a weight factor WF1,2 for the first preview image VP1 and the second face F2 (face 20) of the prism. The expressions WF1,1 and WF1,2, the first index counts the viewing position and the second index counts the faces. The weight factors calculated in step S3 are to indicate the contributions of the respective face images FI1 and FI2 to the perceived visual impression at a given location with coordinates (x, y) on the x-y-plane. If the distance (in a z-direction normal to the x-y plane) of the viewing position VP1 from the print 10 is large, the weight factors may be considered to be independent of the x-y-position, and there will be only two weight factors for the entire print. If the distance of the viewing position from the print (in a z-direction normal to the x-y plane) is smaller, the weight factors may still be considered to be constant on increasingly smaller sub-areas on the x-y-plane. In the extreme, it will be necessary to calculate a separate pair of weight factors WF1,1, and WF1,2 for each individual point in the x-y-plane.

In Fig. 1, arrows A1(x, y) that point from a coordinate position (x, y) to the viewing position VP1 have been shown for some selected coordinate positions (one on each face of each prism). These coordinate positions are the same for which the normal vectors N(x, y) have also been shown.

It will be clear from Fig. 1 that the contribution of a given face image to a visual impression at the viewing position VP1 will be largest if the vectors N(x, y) and A1(x, y) are parallel. On the other hand, if the angle between the vectors N(x, y) and A1(x, y) is 90° or larger, the contribution of the face image will be zero because the corresponding face is simply not visible.

In general, the contribution of a face image will depend critically upon the angle of the vector A1 at the given point. The contribution may also depend upon the distance between the given point on the print 10 and the viewing position (in a z-direction normal to the x-y plane), but this dependency will be less critical and may in many cases be neglected. It is therefore convenient to calculate the weight factors by normalizing the direction vectors A(x, y) to unit length (or alternatively to a length that is in inverse proportion to the square of the distance to the viewing position) and then to form the scalar product of the vectors N(x, y) and A(x, y).

Steps S4 and S5 in Fig. 2 are equivalent to the steps S2 and S3 but relate to the second viewing position VP2.

The pixel values of the face images FI1 and FI2 are read in step S6. Each face image may be defined in a coordinate system with coordinate axes x1, y1 and x2, y2, respectively, and a color value of a pixel of the face image (for one of the basic colors CMYK) will be a function of the coordinates (x1, y1) and (x2, y2), respectively. It will be observed that each face image is composed of stripes that correspond to the faces of the individual prisms. These stripes will compose a continuous rectangular image only when seen from a direction that is normal to the corresponding faces of the prism (A and NA parallel). Consequently, the coordinates x1 and x2 designate the position of a pixel in the direction along the corresponding face 18 or 20 and in the plane of the cross-sectional view in Fig. 1. Thus, the widths of the face images FI1 and FI2 in the direction x1 and x2, respectively, will be larger than the widths of the substrate 14 in the direction x (by a factor of 2^{1/2} in this example). Consequently, a coordinate transformation has to be made in order to map the pixels of a face image onto the x-y-position on the substrate where that pixel will actually be printed on the three-dimensional structure.

In step S7, the first preview image PI1 for the first viewing position VP1 is calculated by mapping the face images FI1 and FI2 onto the corresponding pixels in the x-y-plane and then calculate the color of each preview image pixel by forming the weighted sum of the color values of the pixels of the face images FI1, FI2 with the weight factors WF1,1, and WF1,2. If the normal vectors N(x, y) and the direction vectors A(x, y) have the length 1, then the weight factors will already be normalized so that WF1,1 + WF1,2 = 1. In the more general case, where the weight factors are also modified in view of different viewing distances or different illumination conditions, the linear combination of weight factors and face image pixel values has to be divided by WF1,1 + WF1,2.

In the example described so far, it has been assumed that the different faces 18, 20 of the basic shape have equal areas. In the more general case, when the faces of the shape have different areas, this may be taken into account by modifying the weight factors in proportion to the areas of the respective faces.

Moreover, it has been assumed so far that the lenticular print 10 is viewed under diffuse illumination conditions. Then, the weight factors will depend only upon the orientation of the direction vectors A. In a more general case, the weight factors may depend also upon the illumination conditions. For example, a more elaborated model may simulate the illumination conditions by defining one or more point like-light sources at predetermined positions relative to the print 10. Then, the weight factors who will also depend upon the angles of incidence of the illuminating light use on the face 18 or 20 at the given coordinate position (x, y) and on the reflection or scattering properties of the respective face. For example, if the faces 18, 20 are essentially met, the weight factors will also include the scalar products of the normal vector and a direction vector of an incident light ray at the given point.

Another effect that may be taken into account in calculating the weight factors and the preview images, in particular in case of patterns with pyramidal basis shapes, is the possibility that, for a given viewing position, especially with the flat viewing angle, one pyramid in the foreground obscures a part of a face of another pyramid in the background. This is however outside the scope of the claimed invention.

Since, in a step S7, the preview image is calculated under the assumption of diffuse lighting conditions, a specular component is added separately in step S8. The specular component may also be based on the normal map calculated in step S1, and known methods such as bump mapping may be used for calculating a specular component that will essentially represent reflections at the periodic pattern of the lenticular structure. Steps S9 and S10 are repetitions of the steps S7 and S8 for the second preview image PI2.

It will be understood that an arbitrary number of preview images for further viewing positions may be calculated in the same way.

## Claims

1. A method of constructing a preview image of an elevated lenticular print (10), the lenticular print having, on a two-dimensional manifold, a periodic pattern of repetitions of a three-dimensional shape (16) that has a number n of faces (18, 20), with surface pixels on the faces (18, 20) of all the repetitions of the shape (16) constituting n face images (FI1, FI2), one for each face of the shape, the method comprising a step of calculating preview images (PI1, PI2) for a number of viewing positions (VP1, VP2) such that the preview image represents an image that will be perceived by a viewer watching the print (10) from the viewing position, and further comprising the steps of:
- calculating a normal map (26) which maps each point on the two-dimensional manifold onto a normal vector (N) that is perpendicular to the face (18, 20) of the shape that is located at that point;
- calculating, for each viewing position (VP1, VP2), for each location on the two-dimensional manifold, and for each face of the shape a weight factor (WF1,1; WF1,2) that represents a contribution of the face image to the color of a preview image pixel that corresponds to the location on the manifold, the weight factor derived from the normal vector (N) of the location on the two-dimensional manifold retrieved from the normal map (26) and a direction vector (A1, A2) that points from the location on the two-dimensional manifold to the viewing position (VP1, VP2); and
- calculating colors of the preview image pixels by summarizing color values of face image pixels that correspond to the preview image pixel over the n faces of the shape, each color value weighted with the weight factor (WF1,1; WF1,2) for the location on the manifold that corresponds to the preview image pixel.

2. The method according to claim 1, wherein the two-dimensional manifold is a flat plane.

3. The method according to claim 1 or 2, wherein the step of calculating the weight factors includes forming a scalar product of the normal vector (N) with a direction vector (A1, A2) that points from the given point on the two-dimensional manifold to the viewing position (VP1, VP2).

4. The method according to any of the preceding claims, wherein the weight factors are calculated under the assumption of diffuse illumination conditions for the elevated lenticular print (10).

5. The method according to claim 4, wherein a specular component that represents reflections at the periodic pattern of the elevated lenticular print is calculated separately based on the normal map (26) and a point like-light source at a predetermined position relative to the elevated lenticular print (10) and added to the preview image to simulate geometry.

## Patentansprüche

1. Verfahren zur Konstruktion eines Vorschaubildes eines räumlichen Lentikulardruckes (10), wobei der Lentikulardruck auf einer zweidimensionalen Manigfaltigkeit ein periodisches Muster von Wiederholungen einer dreidimensionalen Form (16) aufweist, die eine Anzahl n von Flächen (18, 20) hat, wobei Oberflächenpixel auf den Flächen (18, 20) all der Wiederholungen der Form (16) n Flächenbilder (Fl1, Fl2) bilden, je eines für jede Fläche der Form, wobei das Verfahren einen Schritt der Berechnung von Vorschaubildern (Pl1, Pl2) für eine Anzahl von Betrachtungspositionen (VP1, VP2) aufweist, derart, dass das Vorschaubild ein Bild repräsentiert, das ein Betrachter wahrnehmen wird, wenn er den Druck (10) von der Betrachtungsposition aus betrachtet, wobei das Verfahren weiterhin die folgenden Schritte aufweist:
- berechnen einer Normalenkarte (26), die jeden Punkt auf der zweidimensionalen Manigfaltigkeit auf einen Normalenvektor (N) abbildet, der rechtwinklig zu der Fläche (18, 20) der Form ist, die sich an diesem Punkt befindet:
- berechnen, für jede Betrachtungsposition (VP1, VP2), für jeden Ort auf der zweidimensionalen Manigfaltigkeit, und für jede Fläche der Form, eines Gewichtsfaktors (WF1,1, WF1,2), der einen Beitrag des Flächenbildes zu der Farbe eines dem Ort auf der Manigfaltigkeit entsprechenden Pixels eines Vorschaubildes repräsentiert, wobei der Gewichtsfaktor abgeleitet ist von dem von der Normalenkarte (26) gelesenen Normalenvektor (N) des Ortes auf der zweidimensionalen Karte und einem Richtungsvektor (A1, A2), der von dem Ort auf der zweidimensionalen Manigfaltigkeit zu der Betrachtungsposition (VP1, VP2) zeigt; und
- berechnen von Farben der Pixel des Vorschaubildes durch Summieren von Farbwerten der Pixel der Flächenbilder, die dem Pixel des Vorschaubildes entsprechen, über die n Flächen der Form, wobei jeder Farbwert mit dem Gewichtsfaktor (WF1,1; WF1,2) für den Ort auf der Manigfaltigkeit gewichtet wird, der dem Pixel des Vorschaubildes entspricht.

2. Verfahren nach Anspruch 1, bei dem die zweidimensionale Manigfaltigkeit eine flache Ebene ist.

3. Verfahren nach Anspruch 1 oder 2, bei dem der Schritt der Berechnung des Gewichtsfaktors die Bildung eines Skalarprodukts aus dem Normalenvektor (N) mit einem Richtungsvektor (A1, A2) einschließt, der von dem gegebenen Punkt auf der zweidimensionalen Manigfaltigkeit zu der Betrachtungsposition (VP1, VP2) zeigt.

4. Verfahren nach einem der vorstehenden Ansprüche, bei dem die Gewichtsfaktoren unter der Annahme berechnet werden, dass für den räumlichen Lentikulardruck (10) diffuse Beleuchtungsbedingungen bestehen.

5. Verfahren nach Anspruch 4, bei dem eine Glanzkomponente, die Reflexionen an dem periodischen Muster des räumlichen Lentikulardrucks, repräsentiert, gesondert berechnet wird, basierend auf der Normalenkarte (26) und einer punktförmigen Lichtquelle in einer vorbestimmten Position relativ zu dem räumlichen Lentikulardruck (10), und diese Komponente zu dem Vorschaubild addiert wird, um die Geometrie zu simulieren.

## Revendications

1. Procédé de construction d'une image de prévisualisation d'une impression lenticulaire élevée (10), l'impression lenticulaire comportant, sur un ensemble bidimensionnel, un motif périodique de répétitions d'une forme tridimensionnelle (16) ayant un nombre n de faces (18, 20), avec des pixels de surface sur les faces (18, 20) de toutes les répétitions de la forme (16) constituant n images de face (FI1, FI2), une pour chaque face de la forme, le procédé comprenant une étape de calcul d'images de prévisualisation (PI1, PI2) pour un nombre de positions de visualisation (VP1, VP2) de sorte que l'image de prévisualisation représente une image qui sera perçue par un observateur regardant l'impression (10) depuis la position de visualisation, et comprenant en outre les étapes suivantes :
- le calcul d'une carte normale (26) qui mappe chaque point sur l'ensemble bidimensionnel avec un vecteur normal (N) qui est perpendiculaire à la face (18, 20) de la forme qui est située à ce point ;
- le calcul, pour chaque position de visualisation (VP1, VP2), pour chaque emplacement sur l'ensemble bidimensionnel, et pour chaque face de la forme, d'un facteur de pondération (WF1,1 ; WF1,2) qui représente une contribution de l'image de face à la couleur d'un pixel d'image de prévisualisation qui correspond à l'emplacement sur l'ensemble, le facteur de pondération étant dérivé du vecteur normal (N) de l'emplacement sur l'ensemble bidimensionnel récupéré depuis la carte normale (26) et d'un vecteur de direction (A1, A2) qui pointe depuis l'emplacement sur l'ensemble bidimensionnel vers la position de visualisation (VP1, VP2) ; et
- le calcul de couleurs des pixels d'image de prévisualisation en résumant des valeurs de couleur de pixels d'image de face correspondant au pixel d'image de prévisualisation sur les n faces de la forme, chaque valeur de couleur étant pondérée avec le facteur de pondération (WF 1,1 ; WF1,2) pour l'emplacement sur l'ensemble qui correspond au pixel d'image de prévisualisation.

2. Procédé selon la revendication 1, dans lequel l'ensemble bidimensionnel est un plan plat.

3. Procédé selon la revendication 1 ou 2, dans lequel l'étape du calcul des facteurs de pondération inclut la formation d'un produit scalaire du vecteur normal (N) par un vecteur de direction (A1, A2) qui pointe depuis le point donné sur l'ensemble bidimensionnel vers la position de visualisation (VP1, VP2).

4. Procédé selon l'une quelconque des revendications précédentes, dans lequel les facteurs de pondération sont calculés en supposant des conditions d'éclairage diffus pour l'impression lenticulaire élevée (10).

5. Procédé selon la revendication 4, dans lequel une composante spéculaire qui représente des reflets au niveau du motif périodique de l'impression lenticulaire élevée est calculée séparément sur la base de la carte normale (26) et d'une source lumineuse de type point à une position prédéterminée par rapport à l'impression lenticulaire élevée (10) et ajoutée à l'image de prévisualisation pour simuler une géométrie.
